**Europäisches Patentamt**

**European Patent Office**

**Office européen des brevets**

(19)

(11) Veröffentlichungsnummer : **0 089 522**
**B1**

(12) **EUROPÄISCHE PATENTSCHRIFT**

(45) Veröffentlichungstag der Patentschrift :
28.08.85

(51) Int. Cl.⁴ : **B 01 D 17/04**

(21) Anmeldenummer : 83102051.6

(22) Anmeldetag : 03.03.83

(54) **Spaltung von Öl-in-Wasser-Emulsionen.**

(30) Priorität : 06.03.82 DE 3208130

(43) Veröffentlichungstag der Anmeldung :
28.09.83 Patentblatt 83/39

(45) Bekanntmachung des Hinweises auf die Patenterteilung : 28.08.85 Patentblatt 85/35

(84) Benannte Vertragsstaaten :
BE DE FR GB IT NL

(56) Entgegenhaltungen :
DE-C- 365 678
US-A- 3 819 522
US-A- 4 153 545
US-A- 4 321 146
Chemical Abstracts Band 95, Nr. 13, 28. September
1981, Columbus, Ohio, USA Seite 585, Spalte 1,
Zusammenfassung 124007p
Chemical Abstracts Band 95, Nr. 25, 21. Dezember
1981, Columbus, Ohio, USA N.F. CHINOY et al. "Role
of acetylene glycols in the development of aqueous
coatings", Seite 77, Spalte 2, Zusammenfassung
221345e

(73) Patentinhaber : Henkel Kommanditgesellschaft auf
Aktien
Postfach 1100 Henkelstrasse 67
D-4000 Düsseldorf-Holthausen (DE)

(72) Erfinder : Rossmann, Christian
Kolpingstrasse 3
D-4018 Langenfeld (DE)
Erfinder : Riedel, Wolfgang
Hügelstrasse 60
D-4000 Düsseldorf 13 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Gegenstand der Erfindung ist die Verwendung von 2,4,7,9-Tetramethyl-5-decin-4-7-diol — nachstehend als Tetramethyldecindiol bezeichnet — zur Spaltung von Öl-in-Wasser-Emulsionen. Insbesondere handelt es sich um die Spaltung von Emulsionen in neutralen oder alkalischen Reinigungslösungen, die als Verunreinigungen mineralische oder native Öle emulgiert enthalten.

Bei der Bearbeitung von Metallen und der Reinigung von öligen und fettigen Oberflächen im industriellen Bereich fallen vielfach Öl-in-Wasser-Emulsionen an, die vor der Einleitung in Abwasseranlagen oder Vorfluter gespalten werden müssen. Die Emulsionen können sich durch die in den Befettungen vielfach enthaltenen Emulgatoren bilden oder die Öle und Fette werden durch die in der Reinigungslösung vorhandenen Tenside emulgiert. Bei Reinigungslösungen wird die Emulsionsspaltung auch duchgeführt, um die Reinigungsbäder zu regenerieren und deren Standzeit zu verlängern.

Für die Entfettung und Reinigung im industriellen Bereich, insbesondere von metallischen Oberflächen, werden wäßrige Lösungen verwendet, die Tenside und gegebenenfalls Alkalihydroxide sowie Buildersubstanzen, wie Alkalicarbonate, Alkalisilikate, Alkaliphosphate, Alkaliborate, und weiterhin Komplexbildner, wie Phosphonsäuren, Polyhydroxycarbonsäuren, Amino- und Polyaminopolycarbonsäuren und organische und/oder anorganische Korrosionsschutzmittel, enthalten.

Es kann sich hierbei um neutrale bis stark alkalische Lösungen handeln. Als Tenside enthalten die Reinigungslösungen anionische und/oder nichtionische Tenside. Bei der Verwendung werden diese Reinigungslösungen durch Mineralöde und/oder native Öle, denen Emulgatoren, · Korrosionsschutzmittel und andere Öladditive zugesetzt sein können, verunreinigt. Durch die aufgenommenen Verunreinigungen, die durch einen eventuellen Emulgatorgehalt im Öl und die Tenside des Reinigungsmittels in der Lösung emulgiert werden, wird die wäßrige Lösung in ihrer Wirksamkeit beeinträchtigt und schließlich unwirksam. Die Lösungen müssen dann erneuert werden. Vor dem Ablassen der gebrauchten Lösungen müssen diese entsprechend den Abwasservorschriften von Öl befreit werden.

Hierfür ist im allgemeinen eine Spaltung der Öl-in-Wasser-Emulsion erforderlich.

Es ist bekannt, die Spaltung von Öl-in-Wasser-Emulsionen durch Erniedrigung des pH-Wertes auf circa 1, Aussalzen der Lösung oder Zusatz von Flockungsmitteln, wie Aluminium- oder Eisensalzen im sauren Bereich und erneuter Neutralisation durchzuführen. Auch wurde vorgeschlagen, zur Verhinderung einer Ölemulgierung in Entfettungslösungen nur nichtionische Tenside mit einem Trübungspunkt unter 40 °C zu verwenden beziehungsweise das Entfettungsbad auf eine Temperatur über den Trübungspunkt des Tensids zur Erzielung einer Ölseparierung zu erwärmen. Das Verfahren hat den Nachteil, daß eine höhere Temperatur des Lösung erforderlich ist. Auch ist das Verfahren in Elektrolytfreien Lösungen für die Praxis nicht hinreichend brauchbar.

Es wurde nun gefunden, daß man zur Spaltung von Öl-in-Wasser-Emulsionen vorzüglich Tetramethyldecindiol verwenden kann. Das entsprechende Verfahren ist dadurch gekennzeichnet, daß man der Öl-in-Wasser-Emulsion 2,4,7,9-Tetramethyl-5-decin-4,7-diol in einer Menge von 0,5 bis 50 g/l, vorzugsweise 0,5 bis 5 g/l, bezogen auf das Volumen der Emulsion zusetzt. Die Öl-in-Wasser-Emulsionen enthalten anionische und-/oder nichtionische Tenside und/oder Emulgatoren sowie gegebenenfalls anorganische und/oder organische Builder und/oder Komplexbildner sowie gegebenenfalls Korrosionsschutzmittel, Alkalihydroxide und Inhibitoren. Durch den Zusatz von Tetralethyldecindiol wird die Emulsion schnell und zuverlässig gespalten. Auch bei Anwesenheit anionischer Tenside wird der Restölgehalt in der wäßrigen Lösung sehr niedrig gehalten.

Die Emulsionsspaltung mit Tetramethyldecindiol kann im neutralen oder auch schwach oder stark alkalischen Milieu erfolgen, ohne daß eine Neutralisation der Lösung erforderlich ist. Ferner ist es ein besonderer Vorzug des erfindungsgemäßen Verfahrens, daß bei Raumtemperatur gearbeitet werden kann. Gewünschtenfalls kann jedoch auch bei Temperaturen bis etwa 100 °C gearbeitet werden.

Das erfindungsgemäße Verfahren ist geeignet, neutrale bis stark alkalische Reinigungslösungen, die als Verunreinigungen mineralische und/oder native Öle emulgiert enthalten, zu regenerieren. In diesem Falle wird die Reinigungslösung nach Abtrennung der Öl/Tetramethyldecindiol-Phase erneut verwendet.

Bei der Regenerierung der Reinigungslösungen verlorene Lösungsanteile können durch Zugabe von Wasser und Ergänzung mit Reinigungsmittel bis zur Sollkonzentration ausgeglichen werden. Die Reinigungslösung ist im allgemeinen wieder voll wirksam. Nur in Einzelfällen ist eine Ergänzung des Tensidgehaltes erforderlich. Eine pH-Wert-Veränderung der Reinigungslösung, die zu einer Beeinträchtigung der Reinigungswirkung führen würde, findet bei der Regenerierung nicht statt. Das Regenerierverfahren kann für die gleiche Reinigungslösung nach erneuter Verunreinigung wiederholt durchgeführt werden.

Beispiele

Der Anmeldungsgegenstand wird durch die nachfolgenden Beispiele erläutert, ohne hierauf beschränkt zu sein. Bei den Angaben in Prozent handelt es sich, sofern nichts anderes angegeben wird, stets um Gewichtsprozent.

Die Prüfung der Emulsionsspaltung kann in einem Standversuch, bei dem die Phasentrennung einer Öl-in-Wasser-Emulsion in Abhängigkeit von der Standzeit festgestellt wird, vorgenommen werden. Zur dynamischen Prüfung des Spaltvermögens wurde eine Apparatur verwendet, die in « Seifen — Öle — Fette — Wachse », 1978, Seite 325 von Kindscher beschrieben ist (siehe Abbildung). Sie dient dazu, die Ölabscheidung aus den im Kreislauf geführten Ölemulsionen zu messen. In dem in einem Thermostat (a) hängenden 2,5-l-Stahltopf (b) wurden 2 l der 3 %igen Lösungen der jeweils zu prüfenden Mittel in Wasser (Härte = etwa 16 °d) temperiert vorgelegt. Aus einem Tropftrichter wurden 50 ml Spindelöl innerhalb einer Minute unter Rühren mit einem Propellerrührer (c) (Drehzahl = 300/min) zugegeben. Die Emulsion wurde noch 5 Minuten gerührt, bevor der eigentliche Meßvorgang begann.

Hierbei wurde mit einer Schlauchpumpe (d) (Umpumpgeschwindigkeit = 25 l/h) die Emulsion durch das temperierte, kalibrierte Doppelmantel-Separationsgemäß (e) und einen Durchflußmengenmesser (f) in das Emulgiergefäß zurückgeleitet. Durch die Beruhigung der Emulsion im Separationsgefäß war eine Abtrennung von Öl aus der Emulsion möglich. Das Volumen der sich abscheidenden klaren oder trüben Ölschicht wurde in Volumenprozent, abhängig von der Umlaufzeit der Emulsion, registriert.

Beispiel 1

In einem Standversuch scheidet sich bei Raumtemperaur aus einer Emulsion von 5 g/l Mineralöl in einer Lösung aus 50 g/l Metasilikat und 1 g/l Anlagerungsprodukt von 14 Mol Ethylenoxid an Nonylphenol nach einer Standzeit von 2 Stunden eine Emulsionsphase ab. Die noch milchige untere wäßrige Phase enthielt 330 mg/l Mineralöl. Wird der gleichen Emulsion 1 g/l Tetramethyldecindiol zugegeben, so scheidet sich an der Lösungsoberfläche eine reine Ölphase ab. Die untere wäßrige Phase enthielt nach 2 Stunden nur noch 78 mg/l Mineralöl.

Beispiel 2

Im Standversuch scheidet sich bei Raumtemperatur aus einer Emulsion von 5 g/l Mineralöl in einer Lösung aus 50 g/l Metasilikat und 1 g/l Alkylbenzolsulfonat nach einer Standzeit von 2 Stunden eine Emulsionsphase ab. Die noch milchige wäßrige Phase enthielt 173 mg/l Mineralöl. Wird einer in gleicher Weise hergestellten Emulsion 1 g/l Tetramethyldecindiol zugesetzt, so scheidet sich auf der Oberfläche schnell eine reine Ölphase ab. Die klare wäßrige Phase enthielt nur noch 31 mg/l Mineralöl. In der Apparatur nach Kindscher zur Beurteilung des Emulgierverhaltens unter dynamischen Bedingungen scheidet sich bei einer Temperatur von 70 °C aus einer Emulsion von 5 g/l Mineralöl in einer Lösung aus 50 g/l Natriumdiphosphat und 1 g/l Alkylbenzolsulfonat eine Emulsionsphase von 7 ml ab. Werden der Emulsion 1 bis 4 g/l eines Ethylenoxid/Propylenoxid-Blockpolymerisates (90 % Propylenoxid, 10 % Ethylenoxid) zugesetzt, so scheidet sich nur eine sehr kleine Ölphase neben einer Emulsionsphase von 4 ml ab. Wird dagegen der Emulsion 1 g/l Tetramethyldecindiol zugesetzt, so wird die Emulsion vollständig gespalten, und es scheidet sich eine Ölphase von 4 ml ab.

Beispiel 3

In der Apparatur nach Kindscher scheidet sich bei einer Temperatur von 70 °C aus einer Emulsion von 5 g/l Olivenöl in einer Lösung aus 50 g/l Metasilikat und 1 g/l Anlagerungsprodukt von 10 Mol Ethylenoxid an Nonylphenol nach 30 Minuten eine Emulsionsphase von 4 ml ab. Bei Zusatz von 0,5 g/l Tetramethyldecindiol scheiden sich nach 30 Minuten eine einheitliche Ölphase von 2,5 ml und eine Tetramethyldecindiolphase von 0,5 ml ab.

Beispiel 4

Aus einer builderfreien neutralen Reinigungslösung, die 1 g/l Anlagerungsprodukte von 11 Mol Ethylenoxid an Nonylphenol und zum Korrosionsschutz 1 % Triethanolamincaprylat enthielt, wurden 5 g/l Mineralöl einemulgiert. In der Apparatur nach Kindscher schied sich bei 30 °C keine Ölphase, sondern nur eine Emulsionsphase ab. Nach Zusatz von 4 g/l Tetramethyldecindiol separierten 80 % des Mineralöls. Die Reinigungslösung konnte anschließend für einen weiteren Reinigungszyklus eingesetzt werden und nach erneuter Aufnahme von circa 5 g/l Mineralöl in der gleichen Weise regeneriert werden.

Beispiel 5

In einer Tauchentfettung für mit Mineralöl verunreinigten Metallteilen wurde ein Entfettungsmittel, bestehend aus 40 % Ätznatron, 25 % Natriummetasilikat, 5 % Natriumpyrophosphat, 25 % Natriumcarbonat und 2,5 % Alkylbenzolsulfonat sowie 2,5 % Anlagerungsprodukte von 14 Mol Ethylenoxid an Fettalkohol, in 5 %iger Konzentration eingesetzt. Das abgelöste Mineralöl wird vollständig emulgiert. Nach Zusatz von 1 g/l Tetramethyldecindiol scheidet sich nach Ruhezeiten von 30 Minuten 85 % des Mineralöls ab, das abgezogen werden kann. Durch diese Maßnahme konnte die Standzeit des Entfettungsbades um ein Vielfaches verlängert werden.

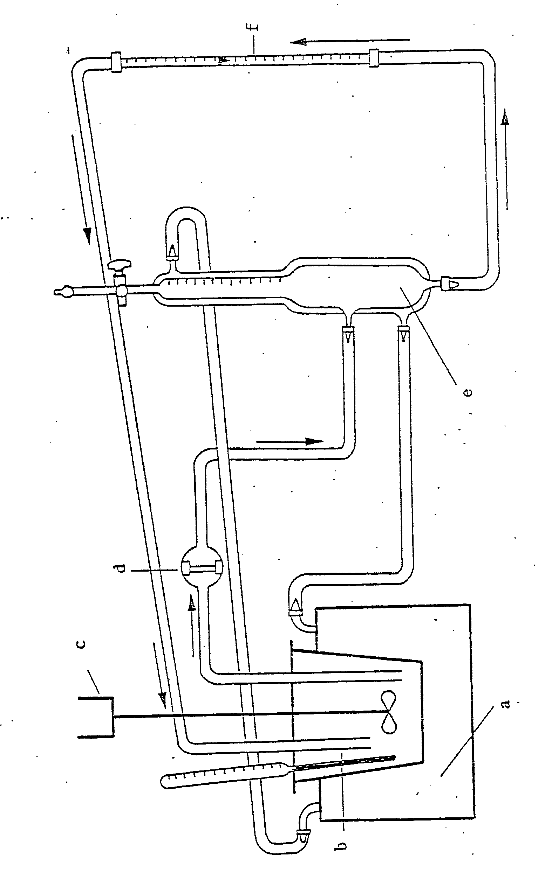

Patentansprüche

1. Verwendung von 2,4,7,9-Tetramethyl-5-decin-4,7-diol zur Spaltung von Öl-in-Wasser-Emulsionen.

2. Verfahren zur Spaltung von Öl-in-Wasser-

Emulsionen, dadurch gekennzeichnet, daß man der Emulsion vorzugsweise bei Raumtemperatur 2,4,7,9-Tetramethyl-5-decin-4,7-diol in einer Menge von 0,5 bis 50 g/l, vorzugsweise 0,5 bis 5 g/l, bezogen auf das Volumen der Emulsion, zusetzt.

3. Verfahren gemäß Anspruch 2, dadurch gekennzeichnet, daß man Öl-in-Wasser-Emulsionen in Form von neutralen bis stark alkalischen Reinigungsmitteln, die mineralische und/oder native Öle und Fette emulgiert enthalten, spaltet, die entsprechende Öl/Tetramethyldecindiol-Phase abtrennt und gegebenenfalls nach Einstellung der Sollzusammensetzung der Reinigungslösung diese erneut verwendet.

### Claims

1. The use of 2,4,7,9-tetramethyl-5-decine-4,7-diol for breaking oil-in-water emulsions.

2. A method of breaking oil-in-water emulsions, characterized in that 2,4,7,9-tetramethyl-5-decine-4,7-diol is added to the emulsion, preferably at room temperature, in a quantity of from 0.5 to 50 g/l and preferably in a quantity of from 0.5 to 5 g/l, based on the volume of the emulsion.

3. A method as claimed in Claim 2, characterized in that oil-in-water emulsions in the form of neutral to strongly alkaline cleaning preparations containing mineral and/or native oils and fats in emulsified form are broken, the corresponding oil/tetramethyl decine diol phase is separated off and the cleaning solution re-used, optionally after adjustment of the desired composition.

### Revendications

1. Utilisation du 2,4,7,9-tétraméthyl-5-décine 4,7-diol pour la séparation des émulsions d'huile dans l'eau.

2. Procédé pour la séparation des émulsions d'huile dans l'eau, caractérisé en ce que l'on ajoute à l'émulsion, de préférence à la température ambiante du 2,4,7,9-tétraméthyl-5-décine-4,7-diol, dans une proportion de 0,5 à 50 g/l, de préférence de 0,5 à 5 g/l, calculé sur le volume de l'émulsion.

3. Procédé suivant la revendication 2, caractérisé en ce que l'on sépare des émulsions d'huile dans l'eau sous forme d'agents de nettoyage neutres et jusqu'à ce qu'ils deviennent fortement alcalins, contenant en émulsion des huiles et graisses minérales et/ou natives qui séparent la phase huile/tétradécinediol correspondante, et qui la réutilise à nouveau éventuellement après avoir ajusté la composition prescrite pour la solution de nettoyage.